# EUROPEAN PATENT APPLICATION

(11) **EP 4 549 629 A1**
(43) Date of publication of application: **07.05.2025**
(21) Application number: 23207450.0
(22) Date of filing: 02.11.2023
(51) Int. Cl.: C25B 15/02, C25B 1/04, G06Q 10/04

(54) **METHOD OF DETERMINING A DEGRADATION OF AN ENERGY SYSTEM AND COMPUTER PROGRAM PRODUCT**

(71) Applicant: Siemens Energy Global GmbH & Co. KG, 81739 München (DE)
(72) Inventor: Yan, Xuqian, 85579 Neubiberg (DE); Helmers, Lennard, 45481 Mülheim a.d. Ruhr (DE)

(57) **Abstract**

A method of determining a degradation of an energy system (1, 1'), such as an electrolyser system, is presented. The method comprises the steps of, (i), providing an empirical model (M) of a degradation reference figure (Uref), wherein the reference figure (Uref) is suitable to estimate the degradation of a given system (1) out of a set of similar energy systems (1, 1'), and wherein at least one unknown model parameter (Cn) is fitted, (ii), providing fleet information (F) from the set of systems (1, 1') to the model (M), wherein fitted model parameters (Cnm) of a plurality of the systems (1, 1'), each parameter (Cn) comprising an evolution over time (t), are aggregated to form a fleet-based parameter (Cn'), and, (iii), matching the model (M) with a target energy system (1) via a statistical inference, particularly a Bayesian inference, by using the fleet-based parameter as prior probability distribution (Pr), wherein a degradation figure (U) of the target system (1) is calculated. Moreover, a related computer program product and a related apparatus, are provided.

## Description

The present invention relates to a method of determining, assessing or quantifying a degradation of an energy system, such as an electrolyser system. More particularly, the system may relate to a PEM (polymer electrolyte or proton exchange membrane) electrolyser system. These PEM electrolyser systems may be composed of a plurality of electrolyser stacks and/or modules.

In other words, the presented approach aims at an improved health estimation for PEM or water electrolysers or its predictive maintenance. This is particularly supported by fleet-based performance model as will be outlined further herein.

Electrolysis, particularly PEM water electrolysis (PEMWE), currently gains ever more importance due to its capacity to synthesize green hydrogen as a key energy source for industrial and domestic applications in future. In the face of climate change, the production of green hydrogen by renewable energy capacities provides lots of opportunities in many industrial sectors to reach climates targets and likewise replace conventional energy carriers accordingly.

In PEM electrolysis, water is electrochemically split into oxygen and hydrogen (H₂), expediently by using renewable energy sources like wind or solar power, or photovoltaics. Hydrogen or hydrogen carriers have evidently an enormous potential as storage medium, green fuels or related fuel constituents for plenty of industrial processes. A particular merit of PEM-electrolysis is its outstanding part-load capability, e.g., over alkaline approaches. This property is particularly a prerequisite for making use of (spatially and temporally) intermittent renewable energy.

Moreover, PEM electrolysis excels in a comparably simple design and allows to operate at high power, high current density and provides for a favorable good purity and output of the produced hydrogen.

A PEM electrolysis cell comprises a membrane, having on both sides related catalyst layers which contact so-called gas diffusion layers or electrodes. On the outer sides of these (porous) gas diffusion electrodes, in turn, contact or bipolar plates, which serve for a related electrical contact of the cell, adjoin and contact the gas diffusion electrodes.

The gas diffusion electrodes are likewise configured to account for the required mass transport during the intended operation of the electrolysis cell. Further, the gas diffusion electrodes establish the required electrical conductivity in order to contact the bipolar plates and the catalyst layers electrically for establishing the desired electrochemical reaction.

The electrolytical production of hydrogen by water electrolysis requires water as a reactant, which is to be split in oxygen and hydrogen. The related chemical reactions are set forth below:

| | |
|---|---|
| Anodic electrode | 2*H*₂0 → 4*H*⁺ + 0₂ + 4*e*⁻ |
| Cathodic electrode | 4*H*⁺ + 4*e⁻* → 2*H*₂ |

These reactions are spatially separated by the above-mentioned ion-conducting membrane which needs to be electrically contacted to the cathodic catalyst and the anodic catalyst, respectively.

Quantifying and tracking the degradation status of a water electrolyser energy system is essential to optimize its operation and plan the usually complex and expensive maintenance activities. Said maintenance is even more challenging - the more so as electrolysers operating at customer sites are concerned, wherein the servicing entity needs to rely on the availability of the customer. For that reason, it is generally very impractical to run standardized tests on a regular basis.

Still further, degradation-related measurements significantly vary with the specific operating conditions, like operation temperature and operational current.

The present invention seeks to solve the above problems by introducing an empirical model and a degradation reference figure. Additionally, as will be set forth below, a fleet-based approach considering a degradation history of a plurality of related energy systems, is part of the presented invention.

Currently the degradation state of water electrolysers is quantified by performing "polarization curve" tests. This is a common practice which is also referred to in harmonized protocols, e.g., for testing of water electrolysers operating at low temperature.

This standard approach has, however, three main drawbacks. At first, it does not provide for a required continuous degradation quantification. Instead, such test is only performed sporadically, such as at test rigs or at customer sites, where the energy system or fleet is located. Sometimes it is even only conducted on-demand, i.e., only when customer requires or agrees to execute such a test, hence often very rarely.

The term "fleet" shall denote preferably a preexisting set of similar energy systems, such as a set with a quantified or predefined aging behaviour.

As a second detriment, the related energy or electrolyser system requires to follow a quite complex and time-consuming (pre-defined) procedure to provide stable and reliable degradation results. Just to give an example, it usually takes several days to conduct the above procedure in a reliable manner. Therefore, it is impractical to arrange such tests frequently.

Thirdly, it is generally difficult to make sure the test runs under strictly comparable and reproducible conditions. A small deviation of, e.g., only 1°C in temperature difference can already cause a huge bias to the measurement.

It is, thus, an object of the present invention to provide means that solve and/or relieve the above problems.

The mentioned object is achieved by the subject-matters of the independent claims. Advantageous embodiments are subject-matters of the dependent claims.

An aspect of the present invention related to a method of determining or assessing a degradation of the energy system, such as an electrolyser system.

The method comprises providing an empirical (data) model of a degradation reference figure, wherein the reference figure is suitable to estimate the degradation of a given system, e.g., out of a set of similar energy/electrolyser systems, and wherein at least one, such as one out of a plurality of, unknown model parameter is fitted in the model. The word "similar" shall be understood in broad terms, e.g., also comprising a system that may have differences as compared to a reference system, but wherein it still makes sense in the inventive context to model or compare data of both mentioned systems.

The method further comprises providing or inputting fleet information from the set of systems to the model, wherein fitted model parameters of a plurality of the systems, each parameter comprising an evolution over time or time interval, are aggregated to form a fleet-based parameter. Said fleet information may comprise or relate to current data or knowledge that is available to date. In other words, this step may be understood as calculating the mentioned reference figure.

The method further comprises matching or fitting the model with a target energy system, such as the electrolyser system for which the degradation quantification is actually needed, via a statistical inference, particularly a Bayesian inference, by using the fleet-based parameter as so-called prior probability distribution, wherein a degradation figure or a degradation state of the target system is calculated, hence estimated.

In other words, the invention uses data-driven modelling technique, while the known solutions (e.g., polarization curve tests) relies on and requires conducting physical tests (on-site).

The present invention particularly excels in providing a more efficient, continuous, and reliable degradation quantification, notably irrespective and independent from the given operation profile. The presented model particularly allows to calculate the degradation figure quasi under the same operating condition regardless of the actual operating situation. Thereby, the provided model provides a powerful health estimation or predictive maintenance capacity which has proven to function very reliable and delivering very accurate degradation assessments. This in turn renders on-site maintenance tests largely superfluous.

As another advantage, the presented solution saves time and cost to conduct physical tests. In turn, this leads to an increase of the availability and profitability of an electrolysis plant and hence to scale up effectiveness of hydrogen production.

In an embodiment the system is an electrolyser system, and the degradation reference figure is a reference voltage. Correspondingly, the set of (similar) systems may relate to an ensemble of (similar) electrolyser systems. According to this embodiment, the merits of the invention may be exploited for electrolyser systems, in particular.

In an embodiment the model maps the cell voltage in relation to the most relevant operating conditions, like e.g., an operating current and temperature, of the electrolyser system. This embodiment advantageously enables to account for the related operating conditions to the benefit of a versatile modeling and degradation estimation.

In an embodiment the degradation reference figure is fitted for a plurality of operating criteria or operating conditions, amongst them an operating time, like hours after the start of a system, an operating temperature, and/or a current or current density. Hence the operating time does preferably not point to a total time that measures the aging or degradation, like in terms or overall operating hours of the system. In order to give another example, the operating temperature of several systems of the set may vary by a several degrees (°C), wherein one system may attain an operating temperature 57° C, while another one attains, e.g., 59° C.

In an embodiment, a logarithm of the operating time since a last start of the respective energy system is parameterized in the fitted degradation reference figure. This functionality advantageously allows for a correction of a transient effect to a common reference or stabilized time, e.g., 100 hours (h) and still allows for a another, preferably much slower time-dependency, i.e., extending over many, of these 100h-intervals, for instance.

In an embodiment the empirical model is a linear model comprising several, such as three or more, preferably five, unknown parameters, and the reference figure fits these unknown model parameters. This particular embodiment has proven to be expedient and to provide a good balance in the model between accuracy or complexity on the one side and practicality and computing time on the other side.

In an embodiment the degradation reference figure is fitted for a plurality of time intervals, preferably for each time interval. Accordingly, also the fleet information or aggregated fleet-based parameter is provided to the various model intervals. The mentioned time interval or interval time may be a 'sampling' time interval which is preferably chosen not too long as to allow for a proper time resolution (such as comparable to the time after start of a given system), but also long enough in order to assure a sufficiently large database.

For the avoidance of doubt, it is not inevitably necessary to fit the reference figure for each and every time interval of its dynamic development. That is to say that the presented inventive concept may as well function, if there are certain data losses, such as lacking data in specific intervals. A certain lack or loss of data is anyway tolerated by the inventive concept.

An interval may, e.g., pertain to one day, or several days. If the interval is chosen too short, there will be too little timewise data for the fitting. If the interval is too long, however, degradation may have occurred meanwhile, thus rendering the model less accurate. Hence, it is expedient to fit the model resolved for several time intervals due to the time-dependent degradations dynamics in the operating profile of PEM electrolyser systems.

In an embodiment a data reliability of the fitted parameters is considered and recorded (preferably for each interval) depending on a data distribution. By way of the mentioned data reliability consideration, the data stock may advantageously be validated, cleaned up and/or corrected for evident outlier values, for instance.

In an embodiment a regression analysis, e.g., with probability estimation, like a Gaussian process regression, is used for the aggregation of the fitted model parameters. A related kernel function, particularly a radial basis function kernel, may be used as input to the regression analysis. This approach has proven to be a very expedient reliable, and effective statistical data projection.

In an embodiment a Gaussian process regression is used for the aggregation and a kernel function, particularly a radial basis function kernel, is used as input to the regression analysis. Accordingly, the benefits of a related kernel function can be exploited in the presented approach.

In an embodiment the model is fitted, or the matching performed, via a Bayesian inference, e.g., to combine information from the aggregated fleet parameters and from operation data of the target system using data of the target system.

As a merit of the Bayesian inference approach in general, it is possible to update the probability for a hypothesis as more evidence or information becomes available over time. In the present case, the aggregated fleet parameters relate to the hypothesis, while "operation data" of the target system may be perceived as "evidence".

In an embodiment the model is set up to estimate the degradation figure of the target energy system, i. e. the electrolyser system for which the degradation quantification is needed, with a daily resolution. According to this embodiment, the resolution can be customized depending on the business need (e.g., frequency of condition monitoring).

In an embodiment the empirical model of the degradation reference figure is obtained from a feature selection method, wherein fitting quality across multiple datasets with different characteristics are considered.

A further aspect of the present invention relates to a computer program product comprising executable program instructions, the product being configured, when executed, to perform the steps of providing an empirical model of a degradation reference figure of an energy system, wherein the reference figure is suitable to estimate the degradation of a given system out of a set of similar energy systems, and wherein at least one unknown model parameter is fitted, providing fleet information from the set of systems to the model, wherein fitted model parameters of a plurality of the systems, each parameter comprising an evolution over time, are aggregated to form a fleet-based parameter, and matching the model with a target energy system via a statistical inference, particularly a Bayesian inference, by using the fleet-based parameter as prior probability distribution, wherein a degradation figure of a target system is calculated.

A further aspect of the present invention relates to a computer-readable medium comprising executable program instructions which is configured, when executed, perform the mentioned steps accordingly, i.e. providing an empirical model of a degradation reference figure of an energy system, wherein the reference figure is suitable to estimate the degradation of a given system out of a set of similar energy systems, and wherein at least one unknown model parameter is fitted, providing fleet information from the set of systems to the model, wherein fitted model parameters of a plurality of the systems, each parameter comprising an evolution over time, are aggregated to form a fleet-based parameter, and matching the model with a target energy system via a statistical inference, particularly a Bayesian inference, by using the fleet-based parameter as prior probability distribution, wherein a degradation figure of a target system is calculated.

A still further aspect of the present invention relates to an apparatus for determining of a degradation of an (PEMWE) electrolyser system, the apparatus comprising a modelling unit or calculation unit, preferably comprising a processor, the unit being configured for implementing the empirical model of a degradation reference figure, and wherein at least the one unknown model parameter is fitted in the model.

The apparatus further comprises a reading module being coupled to the modelling unit for recording fleet information from a set of similar electrolyser systems, wherein fitted model parameters of a plurality of electrolyser systems are aggregated to form a fleet-based parameter, and a (degradation) testing module which is configured to calculate or quantify the degradation figure of the electrolyser system by matching it with the model via a statistical inference, particularly a Bayesian inference, and by using the fleet-based parameter as prior probability distribution.

The different modules or units mentioned in this application are broadly understood as entities capable of acquiring, obtaining, receiving or retrieving generic data and/or instructions through a user interface and/or programming code and/or executable programs or any combination thereof. In particular, the modelling unit, and the different modules mentioned hereafter may be adapted to run programming code and executable programs and to deliver the results for further processing.

The different modules and units mentioned herein, or parts thereof, may therefore each contain, at least, a central processing unit, CPU, and/or at least one graphics processing unit, GPU, and/or at least one field-programmable gate array, FPGA, and/or at least one application-specific integrated circuit, ASIC and/or any combination of the foregoing. Each of them may further comprise a working memory operatively connected to the at least one CPU and/or a non-transitory memory operatively connected to the at least one CPU and/or the working memory.

A computer program product or computer-readable medium as referred to herein may relate to a computer program or media constituting or comprising (be it volatile and non-volatile) a memory card, a USB stick, a CD-ROM, a DVD or a file downloaded or downloadable from a server or network. Such product may be provided by a wireless communication network or via transfer of the corresponding information by the given computer program, computer program product or the like. The computer program product may be, include or be included in a (non-transitory) computer-readable storage medium storing applications, programs, program modules, scripts, source code, program code, object code, byte code, compiled code, interpreted code, machine code, executable instructions, and/or the like.

All the parts of the system of the invention may be realized in hardware and/or software, cable-bound and/or wireless, and in any combination thereof. Any of the parts of the system may comprise an interface to an intranet or the Internet, to a cloud computing service, to a remote server and/or the like.

In particular each of the modules and units of the apparatus, may be implemented partially and/or completely in a local computer, in a system of computers and/or partially and/or completely in a remote system, in particular in an edge or cloud computing platform.

In systems based on cloud computing technology, a large number of devices is connected to a cloud computing system via the Internet. The devices may be located in a remote facility connected to the cloud computing system. For example, the devices can comprise, or consist of, equipment, sensors, actuators, robots, and/or machinery in an industrial set-up(s). The devices can be home, office or industrial appliances.

The cloud computing system may enable remote configuring, monitoring, controlling, and maintaining connected devices. Also, the cloud computing system may facilitate storing large amounts of data periodically gathered from the devices, analyzing the data, and providing insights (e.g., parameters or related key performance indicators) and alerts to operators, field engineers or owners of the devices via a graphical user interface (e.g., of web applications).

The cloud computing system may further comprise a plurality of servers or processors (also known as 'cloud infrastructure'), which are geographically distributed and connected to each other via a network.

Advantages and embodiments relating to the described method of determining the degradation and/or the described computer program product or computer-readable medium are valid or pertain likewise to the apparatus as described, and vice versa.

Further, features and advantageous embodiments become apparent from the following description of the exemplary embodiment in connection with the Figures.
Figure 1 shows an exemplary and qualitative polarization (I/V) curve of data of an energy, particularly electrolyser, system by way of the cell (reference) voltage as a function of current.
Figure 2 indicates in an exemplary curve, qualitatively showing the evolvement of a reference voltage Uref over time t.
Figure 3 shows similar to Figure 2, a quantitative exemplary polarization curve, with a cell voltage as a function of an operating current, whereas a plurality of data sets is indicated.
Figure 4 shows an exemplary course of a modeled parameter over time based on a data stock of a plurality of energy systems according to the inventive empirical model.
Figure 5 shows a curve similar to the one as shown in Figure 4, whereas a fleet knowledge is added as an aggregated fleet-based parameter.
Figure 6 indicates by way of three different sub-images a Bayesian inference approach for the matching of the model with a particular energy system.
Figure 7 indicates an exemplary data set of a predicted degradation of a target energy system resolved by three different operating conditions.
Figure 8 indicates, in a basic flowchart, an inventive apparatus and inventive method steps together with further information as to the introduced data-driven degradation estimation method.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

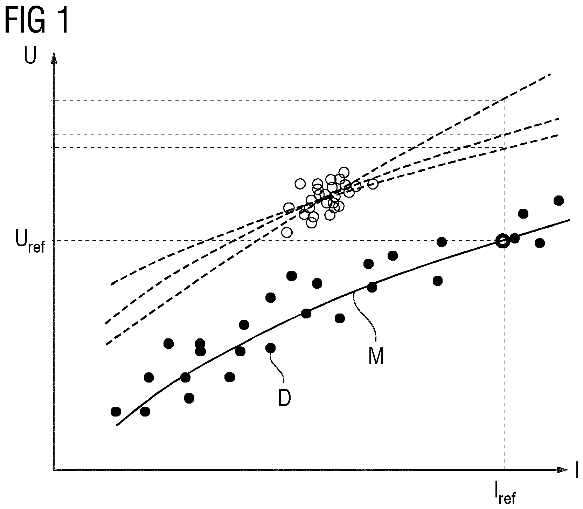

Figure 1 indicates a voltage diagram (similar to an electrolyser's polarization curve) particularly indicating a reference voltage Uref as a function of a related operational current. The curve shown shall preferably and is generally suitable to indicate degradation behaviour of an energy system (cf. reference numerals 1 and 1'), particularly an electrolyser system, like a PEM-electrolyser system. The plot contains a point cloud of measured data points D and a related (best-fit) regression line M indicating the model fit result. In reality, however, modeling the relation between the cell voltage and a related operating condition remains a challenge and is particularly tricky under a limited data coverage. Referring to Figure 1, this problem shall be indicated by data points D' significantly above the model line M which could not have been considered in the model fit.

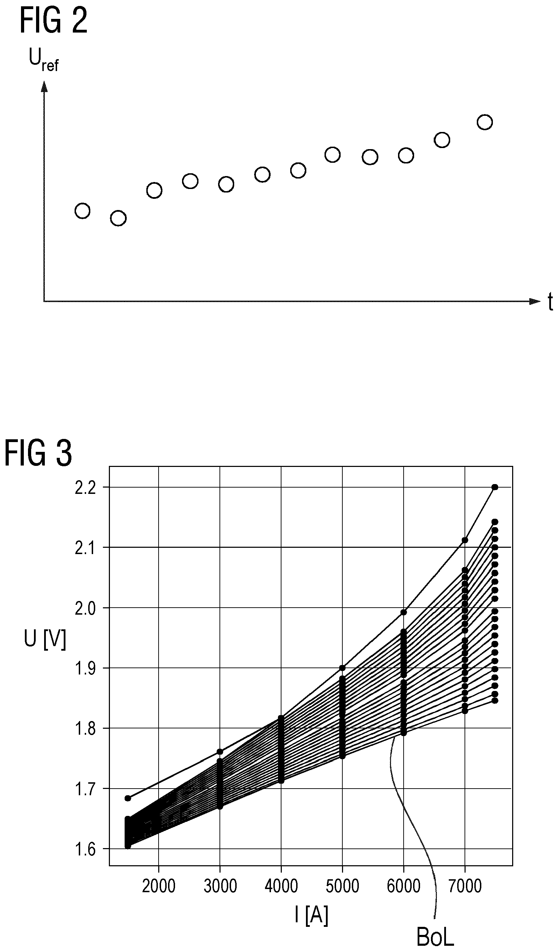

Figures 2 and 3 shall indicate that the reference cell voltage Uref of an electrolyser system 1 evolves, particularly increases, over time t, as electrochemical overpotentials increase. Numeral t here denotes the (overall) degradation time of the system at issue.

In the current situation of an electrolytic cell, the increase of overpotentials is a consequence of the cell to require actually more energy than thermodynamically expected due to any kind of degradation. To this effect, the measurement of Uref in Figure 2 over time increases slightly.

Focusing on the cell voltage over a current or current density, as shown in Figure 3, it is evident that the voltages do not exceed the value of around 1.85 V at the beginning of life (BoL) of the related cell or system, whereas the voltage or potential significantly increases in the same current range of up to 2.2 V, e.g., in a significantly degraded state of the cell.

For solving the problems tackled by the present invention, particularly as described by way of Figure 1 above, the presented is a method of determining a degradation of an energy system 1, 1', such as an electrolyser system. This method particularly provides or introduces an empirical model M of a degradation reference figure Uref, wherein the reference figure Uref is suitable to estimate the degradation of a given system 1 out of a set of similar energy systems 1', and wherein at least one unknown model parameter Cn is fitted.

It is apparent from the following equation, also that a plurality of parameters Cn, e.g., C1, C2, C3, C4 and C5, (C1 and C3 preferably being greater than zero, whereas C4 is preferably smaller than zero) are part of an exemplary model according to the present invention: U = Reversible voltage (U₀) + overpotential. As suggested above, the overpotential accounts for an impact of current I, Iₘₐₓ being the maximum current, T the temperature, t operating time.

More particularly, the voltage may be expressed by the following linear model: U = U₀ + C1 I + C2 IT + C3 ln(t') + C4 ln (1- I/Iₘₐₓ) + C5.

The coefficients or parameters Cn are fitted separately and preferably for each time interval. Without departing from the inventive concept, any other number of (unknown) parameters may be used, such as three parameters Cn, four parameters Cn, or even more, like six, seven, or eight, or still more parameters Cn.

Without loss of generality, the present invention may be implemented by any other (non-linear) model. When even more complex terms and parameters are used or fitted, model and therewith degradation assessment accuracy may still be increased at the expense of a more complex approach, possibly consuming a greater computational effort.

The presented modeling approach was particularly derived or obtained from a feature selection method, wherein fitting accuracy across multiple datasets with different characteristics were considered.

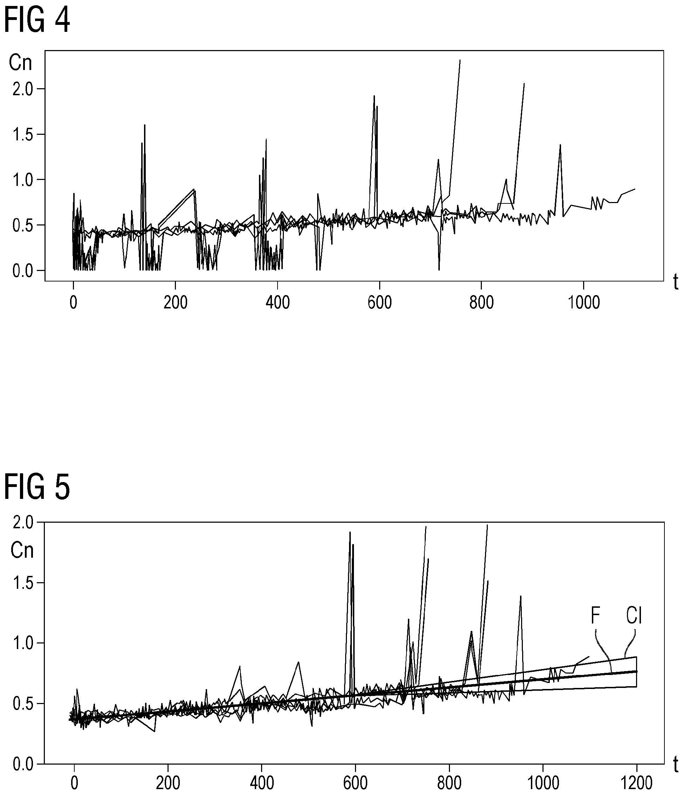

Figure 4 indicates in a diagram a plurality of exemplary courses of an arbitrary parameter Cn out of the above-mentioned ones, e.g., representing C1 for instance and plotted as a function of time t (the indications in the figure relate preferably to days). The numbers on the x-coordinate particularly indicate the days since installation of the given energy or electrolyser system 1. The plots are shown largely overlapping each other with a slightly increasing trend of the parameter and as well showing peaks and outliers, respectively.

The present invention considers a fleet knowledge, such as of the fleet or set of (similar) electrolyser systems, for an as much as possible accurate degradation assessment. Tapping fleet knowledge particularly allows to account for a plurality of operating conditions for the degradation prediction.

Therefore, as shown in Figure 5, the degradation reference figure Uref is fitted particularly for a plurality of time intervals each (not explicitly shown), and wherein the fleet information is provided to the model M also interval-wise or for each interval.

Furthermore, a data reliability of the fitted parameters is considered and recorded depending on a data distribution, wherein the above-mentioned outlier values are preferably cleaned up and deleted in the whole distribution.

Actually, fleet knowledge factors into the model in that the inventive approach provides the fleet information F from the set of systems 1, 1' to the model M, wherein fitted model parameters Cnm of a plurality of the systems 1, 1' - each parameter Cn comprising an evolution over time t - are aggregated to form a fleet-based parameter Cn'.

Index n accounts for the different coefficients or parameters, whereas the above-mentioned index m may relate to the various (similar) energy systems.

In contrast to Figure 4, Figure 5 shows a regression line F of the fleet information, hence aggregated from the various parameter courses Cnm. Numeral CI further indicates a confidence interval. As a Gaussian process model describes a probability distribution over possible functions that fit a set of points, it may give probabilistic predictions by providing the mean and standard deviation as output in the form of this confidence interval CI. The interval CI can, e.g., then be computed with the standard deviation.

The type of regression used for the aggregation is preferably a Gaussian process regression and a kernel function, particularly a radial basis function kernel, is used as input to the process regression. In addition to the kernel, there may be another input or hyperparameter accounting for the noise and controlling smoothness of the function F.

In statistical modeling, a regression analysis is generally a set of statistical processes for estimating the relationships between a dependent variable and one or more independent variables. The most common form of regression analysis is meanwhile the linear regression, in which one finds the line that most closely fits the data according to a specific mathematical criterion. Regression analysis is substantially used for the purpose of prediction and forecasting. More particularly, in statistics, a Gaussian process regression is a non-parametric, probabilistic technique to interpolate data, like in the present case of the parameters Cnm, with uncertainty estimation.

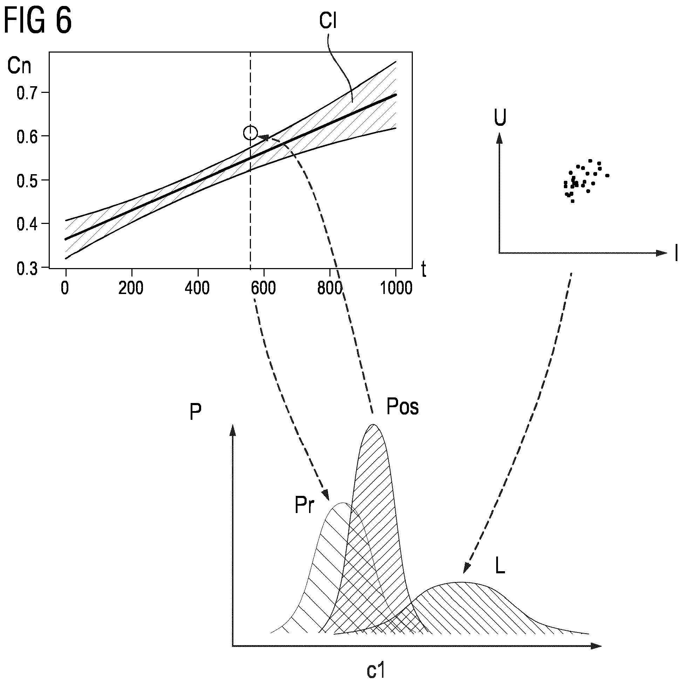

Figure 6 further shows a basic sketch of the principal of the so-called Bayesian inference applied to the presented in degradation estimation approach. The method demands in the third step matching the model M with a target energy system 1 via this statistical inference, by using the fleet-based parameter F as prior probability distribution Pr and data of the target system.

At the bottom of the Figure 6, a probability distribution P is qualitatively shown as a function of an exemplary parameter C1. In the plot three partial probability distributions are shown, i.e., a prior probability distribution Pr, a posterior probability distribution Pos and the data likelihood L. It is shown in the upper right part of Figure 6 that this data likelihood L is taken e.g. from operation data of a target energy system 1 at the given date.

A Bayesian inference in general derives the posterior probability as a consequence of two antecedents: a prior probability and a "likelihood function" derived from a statistical model for the observed data (cf. above). Then, the Bayesian inference computes the posterior probability according to the known Bayes' theorem, presently:
Pos(C | data) ~ L(data | C) Pr(C).

In the upper left part of the Figure 6 it is further shown that, by this Bayesian approach, the data point of the parameter C and to date (cf. dashed vertical line) can be reliably inferred or calculated.

Finally, the degradation Figure U or Uref (cf. the above-described figures) may finally be calculated by inferring each of the relevant parameters in the above modelling equation.

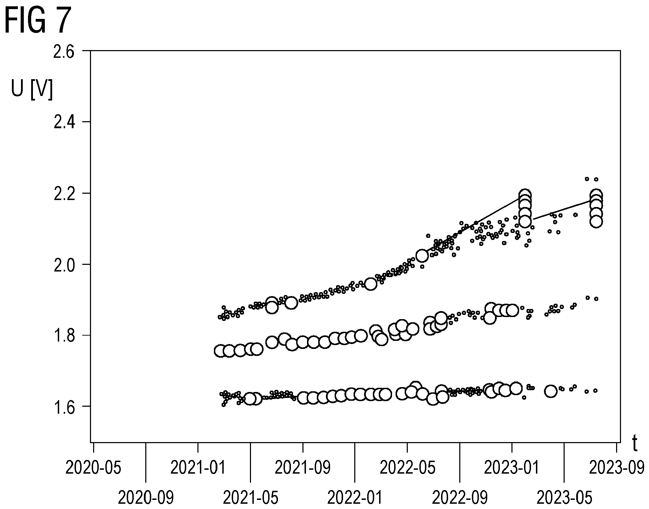

By way of Figure 7 the result of the latter calculation, i. e. the reference figure U for a given energy system or electrolyser module is shown for three different operating conditions. Each operating condition is represented by one of the lines which are shown one above the other in the plot of Figure 7.

At the very bottom, the voltage of an operating condition is shown implying an operating temperature of 57° C, an operating duration after start of three days of the related system, and the current of 1500 A. This voltage fit actually led to a quadratic mean or root mean square deviation or error (RMSE) of 0.0054 V only, which impressively proves the accuracy of the presented degradation estimation.

A similar performance is shown by the other two points clouds, or as the case may be plots, wherein the middle one in Figure 7 implies an operating temperature of 59° C, and an operating time of three days at a current of 4950 A. Here, the RMSE was even slightly smaller, namely 0.0052 V.

For the third estimated operating condition, i.e., a temperature of 57° C, one day after start and a current of 7500 A, the model was still accurate and revealed a root mean square error of 0.0278 V.

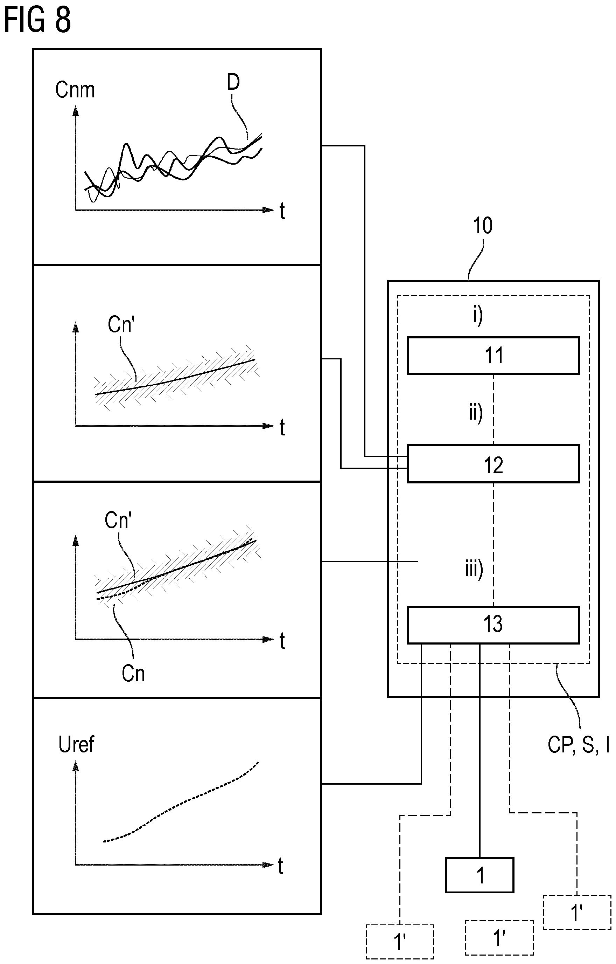

Figure 8 summarizes the provided approach by way of a flowchart and simplified diagrammatic data courses assigned to the different process steps i), ii), and iii).

In other words, than those chosen for the invention description for the above, the method comprises in step i) constructing an empirical voltage model that maps the relation between voltage and the most relevant operating conditions (e. g, current and temperature). The model shown has currently a linear exemplary form, with several, such as 5 unknown parameters, and has preferably an average fitting error, like RMSE, of less than 1 mV. This simple but accurate model is achieved by a "feature selection across multiple datasets" method.

In the second basic method step, ii), fleet knowledge of the fleet or set of similar electrolysers is input to the model along with an information on how the unknown parameters evolve over time. As described, this might imply to fit the empirical voltage model for each time interval (e.g., each day) for all similar electrolysers, or systems. Furthermore, the reliability of the fitted parameters is recorded for each interval and depending on the data distribution. Then, the fitted parameters are aggregated with good reliability to form fleet knowledge, i.e., on how the unknown parameters actually evolve.

Under iii) the empirical voltage model is fitted on the target electrolyser (for which the actual degradation quantification is needed). This is done by the mentioned Bayesian approach, using the fleet knowledge from the second step as prior probability distribution input into the Bayesian approach.

On the right in Figure 8, an apparatus 10 is further sketched. The apparatus 10 is suitable for determining of the degradation of the electrolyser system 1. The apparatus 10 comprises a modelling unit 11 for implementing an empirical model M of a degradation reference figure Uref, and wherein at least one unknown model parameter Cn is fitted in the model M.

The apparatus 10 further comprises a reading module 12 being coupled to the modelling unit 11 for recording the fleet information from the set of similar electrolyser systems 1, 1', wherein fitted model parameters Cn' of a plurality of electrolyser systems 1, 1' are aggregated to form a fleet-based parameter Cn', as described above. The apparatus 10 further comprises a testing module 13 which is configured to calculate the degradation figure U of the electrolyser system 1 by matching it with the model M via the described statistical inference, particularly a Bayesian inference, and by using the fleet-based parameter Cn' as prior probability distribution Pr.

As indicated by reference numeral CP, furthermore, a computer program product CP is introduced, comprising executable program instructions I, wherein the computer program product CP which is configured, when executed, to perform the inventive method steps, i.e., (i) providing the empirical model M of a degradation reference figure Uref of the energy system, wherein the reference figure Uref is suitable to estimate the degradation of a given system 1 out of a set of similar energy systems 1, 1', and wherein at least one unknown model parameter Cn is fitted, (ii) providing fleet information from the set of systems 1, 1' to the model M, wherein fitted model parameters Cnm of a plurality of the systems 1, 1', each parameter comprising an evolution over time, are aggregated to form a fleet-based parameter Cn', and (iii) matching the model M with a target energy system 1 via a statistical inference, particularly a Bayesian inference, by using the fleet-based parameter Cn' as prior probability distribution, wherein a degradation figure U of a target system 1 is calculated.

As a still further part of the present invention, a computer-readable medium M is indicated comprising executable program instructions I, wherein the computer readable medium M is configured, when executed, also perform the above-mentioned steps of the present invention.

## Claims

1. A method of determining a degradation of an energy system (1, 1'), such as an electrolyser system, comprising the steps of:
- (i) providing an empirical model (M) of a degradation reference figure (Uref), wherein the reference figure (Uref) is suitable to estimate the degradation of a given system (1) out of a set of similar energy systems (1, 1'), and wherein at least one unknown model parameter (Cn) is fitted,
- (ii) providing fleet information (F) from the set of systems (1, 1') to the model (M), wherein fitted model parameters (Cnm) of a plurality of the systems (1, 1'), each parameter (Cn) comprising an evolution over time (t), are aggregated to form a fleet-based parameter (Cn'),
- (iii) matching the model (M) with a target energy system (1) via a statistical inference, particularly a Bayesian inference, by using the fleet-based parameter as prior probability distribution (Pr), wherein a degradation figure (U) of the target system (1) is calculated.

2. The method according to claim 1, wherein the system (1, 1') is an electrolyser system and the degradation reference figure (Uref) is a reference voltage.

3. The method according to claim 2, wherein the model (M) maps the cell voltage in relation to the most relevant operating conditions of the electrolyser system (1, 1').

4. The method according to claim 3, wherein the degradation reference figure (Uref) is fitted for a plurality of operating criteria amongst them an operating time (t), an operating temperature (T), and/or a current (I).

5. The method according to claim 4, wherein a logarithm of the operating time (t') since a last start of the respective energy system is parameterized in the fitted degradation reference figure (Uref).

6. The method according to one of the previous claims, wherein the empirical model (M) is a linear model comprising several, preferably five, unknown parameters (C1, C2, C3), and the reference figure (Uref) fits these unknown model parameters (Cn).

7. The method according to one of the previous claims, wherein the degradation reference figure (Uref) is fitted for a plurality of time intervals.

8. The method according to one of the previous claims, wherein a data reliability of the fitted parameters is considered and recorded depending on a data distribution.

9. The method according to one of the previous claims, wherein a regression analysis, particularly a Gaussian process regression is used for the aggregation of the fitted model parameters (Cn).

10. The method according to claim 9, wherein a Gaussian process regression is used for the aggregation and a kernel function, particularly a radial basis function kernel, is used as input to the regression analysis.

11. The method according to one of the previous claims, wherein the model (M) is fitted via a Bayesian inference, by using data of the target system as so-called data likelihood (L) .

12. The method according to claim one of the previous claims, wherein the model (M) is set up to estimate the degradation figure (U) of the target energy system (1), i. e. the electrolyser system for which the degradation quantification is needed, with a daily resolution.

13. A computer program product (CP) comprising executable program instructions (I) which is configured, when executed, to perform the steps of:
- (i) providing an empirical model (M) of a degradation reference figure (Uref) of an energy system (1, 1'), wherein the reference figure (Uref) is suitable to estimate the degradation of a given system (1) out of a set of similar energy systems (1, 1'), and wherein at least one unknown model parameter (Cn) is fitted,
- (ii) providing fleet information from the set of systems (1, 1') to the model (M), wherein fitted model parameters (Cnm) of a plurality of the systems (1, 1'), each parameter comprising an evolution over time, are aggregated to form a fleet-based parameter (Cn'),
- (iii) matching the model (M) with a target energy system (1) via a statistical inference, particularly a Bayesian inference, by using the fleet-based parameter (Cn') as prior probability distribution, wherein a degradation figure (U) of a target system (1) is calculated.

14. A computer-readable medium (M) comprising executable program instructions (I) which is configured, when executed, perform the steps:
- (i) providing an empirical model of a degradation reference figure (Uref) of an energy system (1, 1'), wherein the reference figure (Uref) is suitable to estimate the degradation of a given system (1) out of a set of similar energy systems (1, 1'), and wherein at least one unknown model parameter (Cn) is fitted,
- (ii) providing fleet information from the set of systems (1, 1') to the model, wherein fitted model parameters (Cnm) of a plurality of the systems, each parameter (Cn) comprising an evolution over time, are aggregated to form a fleet-based parameter (Cn'),
- (iii) matching the model (M) with a target energy system (1) via a statistical inference, particularly a Bayesian inference, by using the fleet-based parameter (Cn') as prior probability distribution (Pr), wherein a degradation figure (U) of a target system (1) is calculated.

15. Apparatus (10) for determining of degradation of an electrolyser system (1), the apparatus comprising:
- a modelling unit (11) for implementing an empirical model (M) of a degradation reference figure (Uref), and wherein at least one unknown model parameter (Cn) is fitted in the model (M),
- a reading module (12) being coupled to the modelling unit (11) for recording fleet information from a set of similar electrolyser systems (1, 1'), wherein fitted model parameters (Cn') of a plurality of electrolyser systems (1, 1') are aggregated to form a fleet-based parameter (Cn'), and
- a testing module (13) which is configured to calculate a degradation figure (U) of the electrolyser system (1) by matching it with the model (M) via a statistical inference, particularly a Bayesian inference, and by using the fleet-based parameter (Cn') as prior probability distribution (Pr).
